# FASCICULE DE BREVET EUROPEEN

(11) **EP 1 896 717 B1**
(45) Date de publication et mention de la délivrance du brevet: **20.01.2016**
(21) Numéro de dépôt: 06778671.5
(22) Date de dépôt: 26.06.2006
(51) Int. Cl.: F02K 1/70

(54) **NACELLE POUR AERONEF ET AERONEF MUNI D'AU MOINS UNE TELLE NACELLE**
FLUGZEUGBEHÄLTER UND FLUGZEUG, DAS MIT MINDESTENS EINEM DIESER BEHÄLTER AUSGESTATTET IST
AIRCRAFT POD AND AIRCRAFT EQUIPPED WITH AT LEAST ONE SUCH POD

(30) Priorité: 30.06.2005 FR 0551858
(43) Date de publication de la demande: 12.03.2008
(73) Titulaire: AIRBUS OPERATIONS (S.A.S), 31060 Toulouse (FR)
(72) Inventeur: MARCHE, Hervé, F-31120 Roquettes (FR)
(74) Mandataire: Gicquel, Olivier Yves Gérard
(86) Numéro de dépôt international: PCT/FR2006/001475
(87) Numéro de publication internationale: WO 2007/003749

(56) Documents cités:
- EP-A- 0 728 934
- EP-A- 0 756 078
- EP-A- 0 851 111
- FR-A- 2 120 172
- US-A- 3 279 182

## Description

L'invention appartient au domaine de l'aéronautique. L'invention a pour objet une nacelle pour aéronef. Plus précisément, l'invention a pour objet un inverseur de poussée pour la formation d'un flux inverse à partir d'un flux de poussée secondaire dans la nacelle. L'invention concerne également un aéronef muni d'au moins une telle nacelle.

D'une manière générale, une nacelle comporte un capot dans lequel est logé un moteur. De l'air est aspiré dans la nacelle, à l'endroit d'une extrémité avant de ladite nacelle, située du côté avant de l'aéronef. La nacelle rejette l'air absorbé, à grande vitesse, vers l'arrière de l'aéronef. Pour permettre une avancée de l'aéronef, il est nécessaire que la masse d'air traversant la nacelle ait une vitesse de sortie plus grande que la vitesse d'entrée. La vitesse de sortie de la masse d'air est augmentée, de façon connue, à l'intérieur même de la nacelle.

L'air traversant la nacelle est composé de deux flux différents. Un premier flux, appelé flux primaire, transite par le moteur. Le flux primaire est directement éjecté hors de la nacelle depuis l'arrière du moteur. Un second flux, appelé flux secondaire, transite par un canal de passage d'air, avant d'être éjecté hors de la nacelle. Le canal de passage d'air est ménagé entre une paroi interne du capot de la nacelle et une paroi externe du moteur et s'étend le long dudit moteur.

Lors d'un atterrissage de l'aéronef, des freins mécaniques permettent de freiner mécaniquement ledit aéronef. Cependant, une fois l'aéronef au sol, il est connu d'utiliser, en plus des freins mécaniques, des inverseurs de poussée. Les inverseurs de poussée favorisent notamment la diminution de la distance d'atterrissage de l'aéronef. Par distance d'atterrissage de l'aéronef, on entend la distance parcourue par i'aéronef entre l'instant où les trains d'atterrissage de l'aéronef touchent la piste d'atterrissage et le moment où l'aéronef est complètement arrêté sur la piste. Les inverseurs de poussée dévient tout ou partie des flux d'air sortant à l'arrière de la nacelle, pour les éjecter vers l'avant de l'aéronef. Les inverseurs de poussée créent ainsi une traînée aérodynamique et donc une force de freinage appelée "contre poussée", qui contribue au ralentissement de l'aéronef.

On connaît comme inverseurs de poussée les inverseurs de poussée à portes pivotantes. Une nacelle munie d'un tel système comporte des portes ménagées dans une épaisseur du capot de la nacelle, dans une zone centrale de ladite nacelle. Les portes sont réparties sur une circonférence de la nacelle. On connaît de tels inverseurs de poussée à deux portes, chaque porte suivant une demi-circonférence du capot, et à quatre portes, chaque porte suivant alors un quart de la circonférence du capot. En position inactive, les portes sont fermées, c'est-à-dire qu'elles s'étendent dans un prolongement du capot. En position active, les portes sont ouvertes. L'axe de pivotement des portes est éloigné des extrémités desdites portes. Le débattement des portes est tel qu'une partie avant des portes s'étend alors vers l'extérieur de la nacelle, dans une direction sensiblement perpendiculaire à un axe longitudinal de ladite nacelle, et une partie arrière est logée dans la nacelle, de manière à obturer au moins partiellement le canal de passage d'air. L'écoulement du flux d'air est alors bloqué, et le flux d'air est évacué hors de la nacelle par les orifices dégagés par l'ouverture des portes. La partie avant des portes, qui s'entend hors de la nacelle, permet de diriger le flux vers l'avant de la nacelle. Un tel inverseur de poussée permet d'inverser la poussée issue du flux secondaire seulement, les ouvertures étant ménagées en amont du flux primaire.

Un inconvénient d'un tel inverseur de poussée est qu'il est difficile de préserver un profil aérodynamique sur la face interne et sur la face externe du capot à l'endroit des portes de l'inverseur. En effet, la face interne du capot comporte des moyens d'ouverture et de fermeture des portes de l'inverseur, et éventuellement des moyens de verrouillage. De plus, des joints d'étanchéité sont disposés le long des portes de manière à interdire toute fuite d'air hors du capot de la nacelle lorsque les portes sont fermées. L'ensemble de ces dispositifs tend à perturber l'écoulement de l'air au niveau du capot.

On connaît également un inverseur de poussée à portes permettant de dévier à la fois les flux d'air primaire et secondaire. Les portes d'un tel inverseur de poussée sont ménagées sur une tuyère du moteur, au niveau de l'extrémité arrière du moteur. Lorsque les portes sont fermées, elles s'étendent dans le prolongement du moteur et ne perturbent ni l'écoulement du flux d'air primaire ni l'écoulement du flux d'air secondaire. Lorsque les portes sont ouvertes, elles obturent non seulement le canal de passage du flux d'air secondaire mais également la sortie du flux d'air primaire au niveau du moteur. Il existe également un inverseur de poussée dont les portes sont ménagées sur la tuyère du moteur de manière à ne dévier qu'un seul des deux flux.

Le document US 3,279,182 est considéré comme le document de l'art antérieur le plus proche.

Les portes pivotantes des inverseurs de poussée, et notamment celles ménagées au niveau des tuyères, peuvent se déformer du fait des importantes distorsions auxquelles elles sont soumises. En effet, les flux d'air transitent sous pression dans la nacelle. Par ailleurs, la paroi du capot ou de la tuyère est fragilisée dans la zone où sont ménagées les portes de l'inverseur de poussée. De plus, les portes des inverseurs de poussée présentent une surface de déformation importante, puisque chaque porte de l'inverseur représente la moitié ou un quart de la circonférence du capot ou de la-tuyère.

L'invention propose de fournir un nouvel inverseur de poussée à portes, pour dévier le flux de poussée secondaire, qui permet de résoudre les problèmes relatifs au profil aérodynamique de la nacelle et les problèmes de déformation des portes des inverseurs de poussée tels qu'ils existent actuellement dans l'état de la technique.

Pour cela, les portes de l'inverseur de poussée selon l'invention sont réalisées au niveau de l'extrémité arrière du capot, formant le bord de fuite dudit capot. Par bord de fuite, on entend d'une manière générale la partie arrière d'un profil aérodynamique. On diminue ainsi le nombre d'interfaces internes nécessaires entre les portes et le capot, notamment en ce qui concerne les joints d'étanchéité puisqu'ils ne sont nécessaires que sur la partie avant des portes. Par partie avant des portes, on entend la partie des portes située en amont de l'axe de pivotement desdites portes, par rapport au sens d'écoulement du flux de poussée. Les portes sont agencées selon deux arcs de cercle disposés de part et d'autre du canal circulaire de passage du flux de poussée, de manière à suivre sensiblement un périmètre externe du canal. Les portes de l'inverseur de poussée formant le bord de fuite du capot sont accolées de proche en proche, de sorte qu'en position fermée il n'existe aucun intervalle entre deux portes disposées côte à côte. Par disposées côte à côte, on entend que deux portes adjacentes sont accolées l'une à l'autre sur toute une longueur desdites portes. Avantageusement, l'inverseur de poussée selon l'invention a un nombre important de portes réparties régulièrement sur le périmètre du capot, chaque porte étant de petite superficie. Ainsi, les portes ne sont plus au nombre de deux ou de quatre, mais plutôt au nombre de six, huit, dix, douze voir seize portes ou plus disposées en couronne à la périphérie externe du canal de passage du flux de poussée. En diminuant la superficie de chacune de porte, on diminue les risques de déformation desdites portes. Lorsque les portes sont en position fermée, elles s'étendent dans le prolongement du capot, formant une partie proprement dite dudit capot. Lorsque les portes sont en position ouverte, elles basculent de manière à ce qu'une partie arrière desdites portes soit logée dans le canal circulaire de passage du flux de poussée secondaire, de manière à bloquer le flux de poussée et à faire sortir un flux d'air secondaire inverse hors de la nacelle. Par partie arrière des portes, on entend la partie située en aval de l'axe de pivotement des portes. Dans un exemple de réalisation préféré de l'invention, les portes sont reliées à la structure fixe du capot par l'intermédiaire de poutres fixes s'étendant dans le prolongement du capot. Les poutres sont réparties sur tout le périmètre du capot. Ainsi, il y a une poutre fixe entre chaque paire de portes adjacentes, chacune de ces deux portes étant solidaire de ladite poutre. Les poutres s'étendent par exemple entre une paroi interne et une paroi externe du capot, sur toute une longueur dudit capot, y compris le bord de fuite. Les poutres fixes étant situées entre la paroi interne et la paroi externe du capot, et dans le prolongement dudit capot, elles ne gênent pas l'écoulement de l'air. Les portes sont montées en rotation sur les poutres fixes. Plus précisément, chaque porte est montée en rotation sur deux poutres, de manière à pouvoir pivoter autour d'un axe de rotation passant par ces deux poutres. Avantageusement, les portes recouvrent les poutres lorsqu'elles sont en position fermée.

L'invention concerne également un système de commande pour l'ouverture et de la fermeture synchronisée d'une pluralité de portes notamment des portes d'un inverseur de poussée. Ce système de commande comporte des moyens d'actionnement aptes à être fixés à des poutres fixes s'étendant longitudinalement dans le prolongement des portes, une poutre étant disposée entre deux portes adjacentes. Ainsi, chaque moyen d'actionnement peut commander l'ouverture et la fermeture de deux portes adjacentes montées en rotation de part et d'autre d'une même poutre. Deux portes adjacentes actionnées par le même moyen d'actionnement ne -peuvent pas s'ouvrir indépendamment l'une de l'autre. Une porte centrale peut être bordée par deux portes différentes, s'étendant chacune le long d'un côté opposé de la porte centrale. Cette porte centrale, encadrée par deux portes, peut donc être actionnée par deux moyens d'actionnement différents actionnant chacun deux portes. Ainsi, de proche en proche, le système de commande assure une ouverture et une fermeture synchronisée de l'ensemble des portes. Dans le cas d'un inverseur de poussée, les moyens d'actionnement étant montés sur les poutres fixes, ils ne gênent absolument pas l'écoulement de l'air dans le canal de passage d'air.

L'invention a donc pour objet une nacelle pour aéronef comprenant un capot, un moteur logé dans un volume interne du capot, un canal annulaire d'écoulement d'un flux de poussée secondaire ménagé entre le moteur et le capot, au moins un inverseur de poussée pour la formation d'un flux inverse à partir du flux de poussée secondaire circulant dans le canal annulaire, caractérisé en ce que l'inverseur de poussée comporte une pluralité de portes ménagées dans une partie arrière du capot, de manière à former un bord de fuite dudit capot.

Selon des exemples de réalisation particuliers de l'invention, la nacelle peut comporter tout ou partie des caractéristiques supplémentaires suivantes :
- la nacelle comporte des barres de liaison statiques reliant les portes au capot, les portes étant montées en rotation sur les barres de liaison statiques.
- au moins une barre de liaison relie deux portes adjacentes.
- les barres de liaison sont recouvertes par les portes en position fermée.
- l'inverseur de poussée comporte des moyens d'actionnement des portes, au moins un moyen d'actionnement actionnant deux portes adjacentes et au moins une porte étant actionnée par deux moyens d'actionnement.
- au moins un moyen d'actionnement est monté sur une barre de liaison.
- au moins un moyen d'actionnement comporte un vérin à deux tiges d'actionnement, une extrémité de chaque tige étant solidaire d'une porte.
- l'inverseur de poussée comporte des moyens rotatifs aptes à tourner autour de l'axe du moteur, des moyens d'actionnement étant montés sur les moyens rotatifs de manière à entraîner l'actionnement des portes lors d'une rotation des moyens rotatifs.
- les portes sont munies d'un revêtement acoustique.
- l'inverseur de poussée comporte huit portes.
- l'inverseur de poussée comporte seize portes.
- les portes sont identiques entre elles, et interchangeables.

L'invention concerne également un aéronef comportant au moins une nacelle selon l'invention.

L'invention sera mieux comprise à la lecture de la description qui suit et à l'examen des figures qui l'accompagnent. Celles-ci sont présentées à titre indicatif et nullement limitatif de l'invention. Les figures représentent :
- Figures 1A et 1B : une représentation schématique d'une nacelle vue de côté munie d'un inverseur de poussée selon l'invention en position fermée (figure 1A) et en position ouverte (figure 1B) ;
- Figures 2A et 2B : une représentation schématique de la nacelle vue de face munie de l'inverseur de poussée selon l'invention en position fermée (figure 2A) et en position ouverte (figure 2B) ;
- Figures 3A et 3B : une représentation schématique de la nacelle vue de derrière munie de l'inverseur de poussée selon l'invention en position fermée (figure 3A) et en position ouverte (figure 3B) ;
- Figures 4A, 4B, 4C et 4D : un agrandissement d'une nacelle au niveau des portes d'un inverseur de poussée selon l'invention pendant différentes phases d'ouverture desdites portes ;
- Figurés 5, 6, 7, 8 : une représentation schématique d'un exemple de moyen d'actionnement de l'ouverture des portes d'un inverseur de poussée selon l'invention.

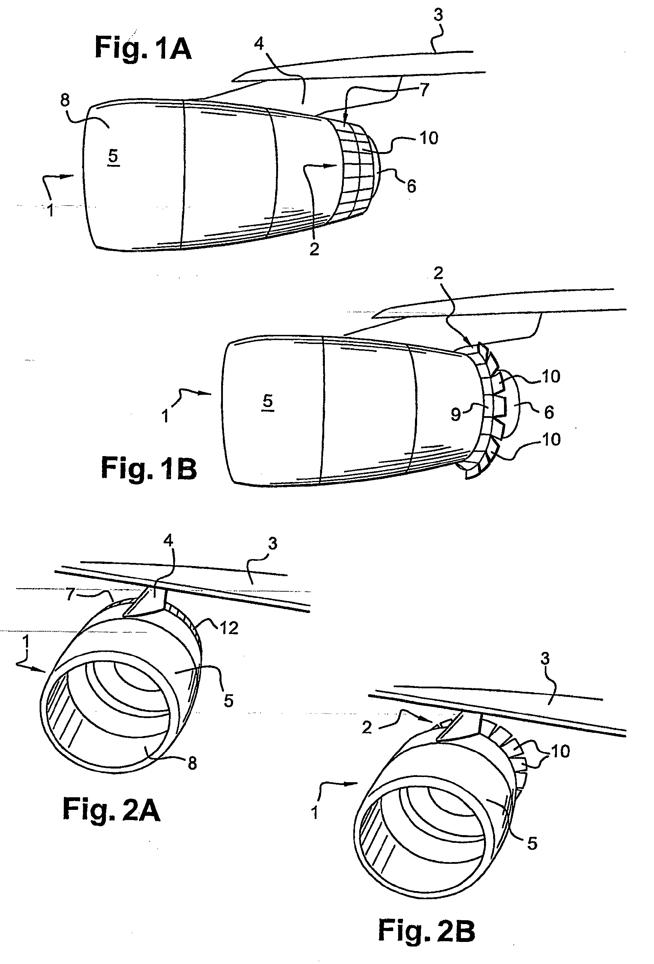

Sur la figure 1A est représentée une nacelle 1 munie d'un inverseur de poussée 2 selon l'invention.

La nacelle 1 est reliée à une aile 3 d'un aéronef (non représenté) par un mât de fixation 4. La nacelle 1 comporte un capot 5 et un moteur 6 logé dans ledit capot 5. Un canal annulaire est ménagé entre le capot 5 et le moteur 6. Un flux de poussée secondaire transite dans ledit canal, depuis une extrémité avant 8 du capot jusqu'à une extrémité arrière 7 dudit capot 5, au niveau de laquelle le flux de poussée secondaire est éjecté hors de la nacelle. L'inverseur de poussée 2 est ménagé à l'endroit de l'extrémité arrière 7 du capot 5 et forme ainsi le bord de fuite du capot 5.

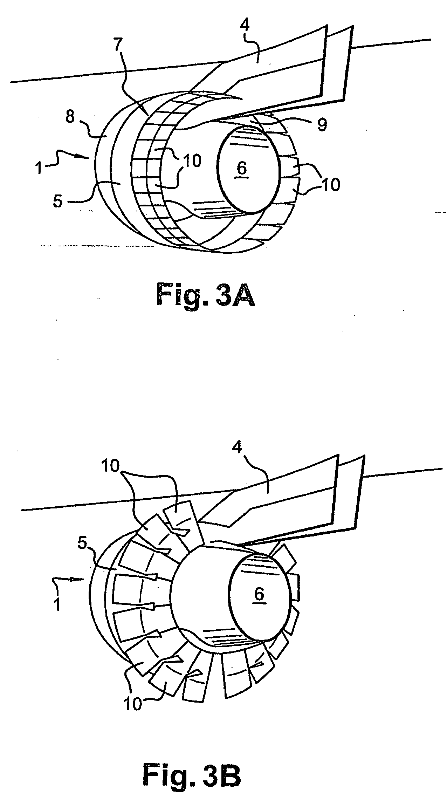

En position fermée, comme cela est représenté sur les figures 1A, 2A et 3A, les portes 10 de l'inverseur de poussée 2 s'étendent dans le prolongement du capot 5, de manière à former l'extrémité arrière 7 dudit capot 5. En position ouverte, comme cela est représenté sur les figures 1B, 2B et 3B, les portes 10 s'étendent radialement sur le capot 5, sur toute la circonférence dudit capot, de manière à obturer le canal de passage d'air 9. Lorsque l'inverseur de poussée 2 de l'invention est ouvert, le flux de poussée est bloqué au niveau de l'extrémité arrière 7 du capot 5, obligeant le flux d'air à sortir vers l'avant de la nacelle 1, formant ainsi un flux inverse apte à freiner l'aéronef muni de la nacelle 1.

Les portes 10 sont disposées selon deux arcs de cercle, chaque arc de cercle suivant une demi-circonférence externe du capot 5, de manière à former un flanc gauche et un flanc droit de l'extrémité arrière, ou partie arrière, 7 du capot 5. Chaque porte 10 est accolée à au moins une autre porte 10 située sur le même arc cercle, de sorte qu'en position fermée, il n'existe aucun passage entre deux portes 10 adjacentes qui pourrait permettre au flux de poussée de s'échapper hors de la nacelle 1. Les portes 10 sont accolées par leurs côtés qui sont perpendiculaires à l'axe de pivotement desdites portes 10. Chaque porte 10 est de petites dimensions puisqu'un inverseur de poussée comporte avantageusement au moins huit portes réparties par quatre sur chaque flanc du capot 5.

Dans un exemple de réalisation particulier de l'invention, toutes les portes 10 peuvent être identiques et interchangeables de manière à faciliter la fabrication de l'inverseur de poussée 2 selon l'invention ainsi que son montage. En effet, il suffit alors de réaliser un unique prototype de porte 10 pour un moteur et un nombre de portes par inverseur donnés. Par ailleurs, le montagne de l'inverseur de poussée 2 est également facilité puisqu'il n'y a pas de risque d'inverser la position de deux portes. Pour cela, la paroi externe des portes 10 de l'inverseur de poussée 2 doit être concentrique à l'axe du moteur. Il est également possible de prévoir que seule la partie interne, acoustique et mécanique, des portes 10 est interchangeable. Les portes 10 sont alors réalisées en deux parties démontables, respectivement interne, c'est-à-dire dirigée vers le moteur 6, et externe, c'est-à-dire dirigée vers l'extérieur de la nacelle 1. La partie externe, elle, peut être différente d'une porte 10 à l'autre.

Comme cela sera décrit plus en détails par la suite, les portes 10 de l'inverseur de poussée 2 selon l'invention peuvent être ouvertes simultanément par l'intermédiaire de moyens d'actionnement desdites portes 10. Ainsi, bien que le nombre de portes 10 de l'inverseur de poussée 2 selon l'invention puisse être élevé par rapport au nombre de portes dans les inverseurs de poussée de l'état de la technique, l'ouverture et la fermeture simultanée des portes 10 de l'inverseur de poussée 2 est garantie.

La position de l'inverseur de poussée 2 à l'endroit de l'extrémité arrière 7 du capot 5 facilite la réalisation dudit inverseur de poussée 2. En effet, en position fermée, les portes 10 de l'inverseur de poussée 2 ne doivent pas permettre au flux de poussée secondaire de s'échapper hors de la nacelle 5 au niveau de la jonction longitudinale entre deux portes adjacentes. Pour cela, il est nécessaire de disposer des joints d'étanchéité entre chaque paire de portes 10 adjacentes. Les joints s'étendent dans la longueur des portes 10, de manière à colmater de manière étanche les interstices entre les bords longitudinaux adjacents desdites portes 10. Par longueur ou bord longitudinal d'une porte, on entend la dimension de la porte parallèlement à l'axe du moteur. Du fait de la cinématique des portes 10, et notamment de la liaison pivot entre les portes 10 et la nacelle 5, la réalisation de ces interfaces peut être difficile. En ménageant les portes 10 à l'endroit du bord de fuite 7 de la nacelle 5, il il n'est pas nécessaire de disposer des joints d'étanchéité sur toute la longueur des portes 10, mais uniquement au niveau de la partie avant desdites portes 10 formant la partie située hors de la nacelle 5 lorsque les portes 10 sont ouvertes. En effet, la partie arrière des portes 10, destinée à être logée dans le canal 9 d'écoulement du flux de poussée lorsque les portes sont ouvertes, peut ne pas être munie de joint d'étanchéité puisqu'elle forme, de toutes façons, le bord de fuite 7 de la nacelle 5 par lequel le flux de poussée est éjecté hors de la nacelle 1.

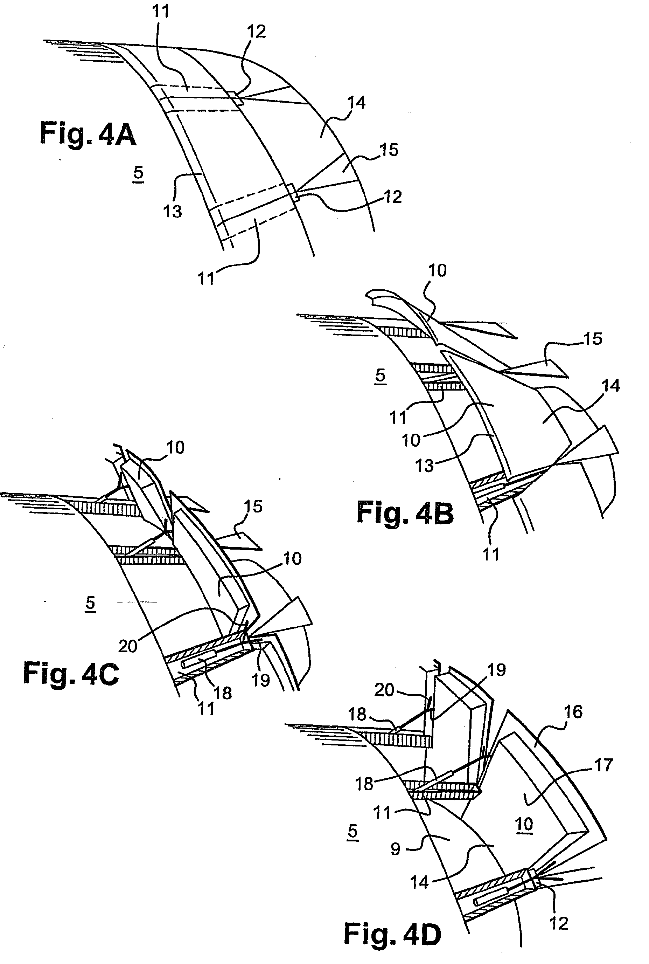

Sur les figures 4A, 4B,4C et 4D, on peut voir que chaque porte 10 est reliée d'une part à une porte 10 adjacente et d'autre part à la nacelle 5 par l'intermédiaire d'une barre de liaison statique 11. La barre de liaison statique 11 s'étend dans le prolongement du capot 5, parallèlement à l'axe du moteur. Deux portes adjacentes 10 sont reliées par un pivot 12 à l'extrémité arrière d'une barre de liaison 11. La barre de liaison 11 est montée fixe par rapport au capot 5. Dans un exemple de réalisation préféré de l'invention, les barres de liaison 11 s'étendent entre une paroi interne et une paroi externe du capot 5, sur toute une longueur dudit capot 5 y compris l'extrémité arrière 7. Ainsi les barres 11 ne perturbent l'écoulement de l'air ni dans le canal d'écoulement d'air, ni à l'extérieur de la nacelle 1. Par ailleurs, on garantit du fait de leur longueur importante une certaine rigidité des barres de liaison 11. Bien entendu, il est possible de rapporter les barres de liaison 11 sur le capot 5, par exemple en soudant l'extrémité avant des barres 11 à la paroi du capot 5, à l'endroit d'une interface entre l'extrémité arrière 7 et la partie centrale dudit capot 5.

Chaque porte 10 est apte à avoir un débattement autour du pivot 12 d'une barre de liaison 11. Le débattement des portes 10 est tel qu'elles peuvent avoir au moins une position fermée stable (figure 4A) et au moins une position ouverte stable (figure 4D). Chaque porte 10 est montée pivotante sur deux barres de liaison statiques 11. De même, une barre de liaison statique 11 peut être reliée à deux portes adjacentes 10. Les barres de liaison 11 qui sont situées aux extrémités des deux arcs de cercle formant les flancs du bord de fuite 7 du capot 5 ne sont reliées qu'à une seule porte 10, elle-même située à une extrémité d'un desdits arcs de cercle. En position fermée, la paroi externe 16 des portes 10 recouvrent les barres de liaison 11 (figure 4A).

La largeur de la partie avant 13 d'une porte 10 est plus grande que la largeur de la partie arrière 14 de ladite porte 10, afin de permettre le débattement de la partie arrière 14 des portes 10 vers l'intérieur du capot 5. Par avant et arrière, on entend selon un sens d'écoulement du flux de poussée dans le canal annulaire. Par largeur de la porte 10, on entend la dimension de ladite porte 10 suivant la circonférence du capot 5, perpendiculairement à l'axe du moteur. Le flux de poussée devant être canalisé tout le long du canal 9 d'écoulement du flux de poussée, il est nécessaire que cette différence de largeur des portes 10 ne soit pas perceptible quand l'inverseur de poussée 2 est position fermée. Il est donc possible de prévoir un papillon 15 entre les parties arrières 14 des portes 10, la forme du papillon 15 épousant le contour desdites parties arrières 14 à l'endroit des jonctions entre les portes 10. Les papillons 15 ferment ainsi le capot 5 lorsque les portes 10 sont en position fermée. Les papillons 15 sont solidaires de l'extrémité arrière des barres de liaison 11. Préférentiellement les papillons 15 font partie intégrante des barres de liaison 11, mais ils peuvent également être rapportés, par exemple par soudure. En position ouverte, ou partiellement ouverte, comme cela est représenté sur les figures 4B, 4C et 4D, les papillons 15 restent dans le prolongement des barres de liaison 11 auxquelles ils sont fixés.

Sur la figure 4D, les portes 10 sont complètement ouvertes. La partie arrière 14 desdites portes 10 est logée à l'intérieur du capot 5, est obture le canal 9 d'écoulement du flux de poussée. Le flux d'air est alors dirigé par la paroi interne 17 des portes 10 hors du capot 5, vers l'avant dudit capot 5 formant ainsi un flux inverse.

L'ouverture et la fermeture des portes 10 peuvent être obtenues par des moyens d'actionnement selon l'invention, situés au niveau des portes 10. Un système de commande permet par exemple d'actionner les moyens d'actionnement depuis le cockpit de l'aéronef. Les moyens d'actionnement des portes sont avantageusement situés au niveau des barres de liaison 11, de manière à ce qu'un même moyen d'actionnement puisse actionner simultanément deux portes 10 adjacentes. Par ailleurs, les moyens d'actionnement situés sur les barres de liaison 11 ne perturbent pas l'écoulement du flux de poussée lorsque l'inverseur de poussée 2 est en position fermée. Une porte 10 étant reliée au capot 5 par deux barres de liaison 11; elle est actionnée par deux moyens d'actionnement différents. Une porte centrale 10 de l'inverseur de poussée 2 est donc actionnée par deux moyens d'actionnement différents, chacun de ces moyens d'actionnement actionnant par ailleurs une des deux portes 10 adjacentes à cette porte 10 centrale. Par porte centrale, on entend une porte encadrée par deux autres portes, du même côté ou flanc du capot.

Dans l'exemple représenté aux figures 4A à 4D, les moyens d'actionnement sont des vérins 18 tels que des vérins pneumatiques ou hydrauliques. Un vérin 18 s'étend dans la longueur d'une barre de liaison 11. En position fermée (figure 4A), les barres de liaison 11, et donc également les moyens d'actionnement 18, 19, 20 sont entièrement recouverts par les portes 10. Le piston du vérin 18 est solidaire d'un pantographe, c'est-à-dire de deux tiges d'actionnement 19 et 20, chaque tige d'actionnement 19, 20 étant par ailleurs solidaire d'une porte 10. Les tiges d'actionnement 19, 20 sont donc solidaires de deux portes 10 différentes adjacentes. Ainsi, par l'intermédiaire du pantographe 18, 19, un même vérin 18 peut pousser ou tirer deux portes 10 adjacentes, interdisant toute ouverture et fermeture différentielle de deux portes 10 adjacentes. Le cheminement, la longueur, le diamètre et la disposition des tuyauteries d'alimentation des vérins 18 sont conçus de manière à équilibrer les pertes de charge d'admission et de refoulement de chaque vérin 18.

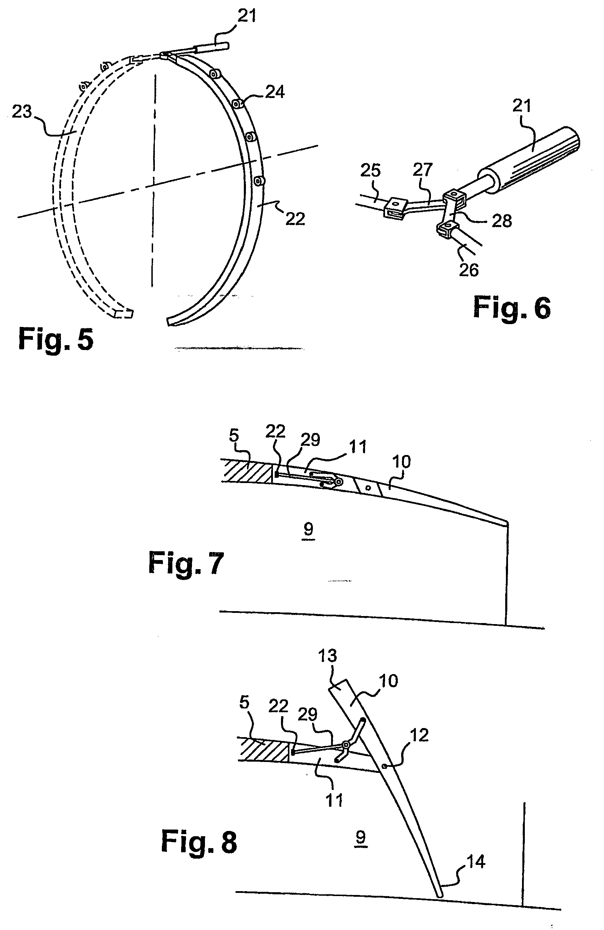

Dans un autre exemple de réalisation du système de commande selon l'invention, tel que représenté aux figures 5 et 6, il est possible de n'utiliser qu'un seul vérin 21. Le vérin 21 unique est par exemple logé entre la paroi interne et la paroi externe du capot 5. Le vérin 21 peut actionner deux demi-couronnes 22 et 23 qui suivent chacune une demi-circonférence de la nacelle 5 de manière à ce que l'axe des demi-couronnes 22, 23 soit confondu avec l'axe du moteur. Les demi-couronnes 22, 23 sont par exemple en appui sur les barres de liaison 11, entre la paroi interne et la paroi externe du capot 5. Les couronnes 22 et 23 sont montées en rotation autour de l'axe du moteur par l'intermédiaire de rails circonférentiels. Le vérin 21 actionne deux bielles 27 et 28 reliées chacune à une extrémité 25, 26 d'une demi-couronne 22, 23. Le point d'accrochage entre les bielles 27, 28 du vérin 21 et les demi-couronnes 22 et 23 peut se situer sur l'axe d'articulation d'ouverture du capot inverseur, ce qui permet de ne pas avoir à déconnecter lesdites bielles 2.7, 28 lorqu'on ouvre ledit capot. Des galets de guidage 24 solidaires des barres de liaison 11 transforment le mouvement de translation des bielles 27, 28 en un mouvement de rotation des demi-couronnes 22, 23. Les portes 10 sont articulées sur les demi-couronnes 22, 23 par l'intermédiaire de bielles transmettant le mouvement des demi-couronnes 22, 23 aux portes 10.

Sur la figure 7 est représentée une coupe longitudinale partielle du capot 5 et du canal d'écoulement d'air 9, à l'endroit d'une porte 10 de l'inverseur de poussée 2 selon l'invention. Une bielle multiple 29 s'étend dans la longueur du capot 5, le long d'une barre de liaison 11 sur laquelle elle est fixée. La bielle multiple 29 est entièrement cachée par la porte 10 fermée.

Sur la figure 8, on peut voir la porte 10 en position ouverte, de manière à ce que la partie arrière 14 de ladite porte 10 obture le canal d'écoulement d'air 9. La bielle multiple 29 est articulée sur la demi-couronne 22 ainsi que sur la barre de liaison 11 et la porte 10. La porte 10 est poussée par une branche de la bielle multiple 29, de manière à ce qu'elle pivote à l'endroit du pivot 12 pour que la partie avant 13 ressorte hors du capot 5 et la partie arrière 14 de la porte 10 pénètre à l'intérieur du canal d'écoulement d'air 9.

Lorsque les portes 10 doivent être fermées, le vérin 21 ramène en position repos les demi-couronnes 22, 23, qui ramènent alors en position repos les bielles multiples 29, qui elles-mêmes ramènent en position fermée les portes 10 auxquelles elles sont reliées.

Les bielles multiples 29 étant fixées aux demi-couronnes 22, 23, elles sont toutes actionnées simultanément, garantissant un actionnement simultané de toutes les portes 10. Une bielle multiple 29 peut être reliée par deux branches différentes à deux portes 10 adjacentes. Ainsi, un même moyen d'actionnement, formé par une bielle multiple 29, permet d'actionner l'ouverture et la fermeture simultanée de deux portes adjacentes 10. Bien entendu, une bielle multiple 29 peut n'actionner qu'une seule porte 10. Dans ce cas, chaque barre de liaison 11 porte deux bielles multiples 29 s'étendant côte à côte, parallèlement l'une à l'autre et actionnant chacune une porte 10.

Les moyens d'actionnement selon l'invention peuvent permettre l'actionnement synchronisé de deux portes 10 adjacentes. De plus, les moyens d'actionnement selon l'invention ne gênent pas l'écoulement du flux de poussée dans le canal 9 lorsque les portes 10 sont en position fermée puisqu'ils ne sont pas situés dans ledit canal 9.

Les portes 10 de l'inverseur de poussée 2 selon l'invention peuvent aisément être dotées d'un traitement acoustique afin de préserver l'environnement sonore. Par exemple, les portes 10 sont recouvertes d'un matériau en nid d'abeille permettant de piéger dans les alvéoles du nid d'abeille les ondes afin qu'elles puissent s'épuiser à l'intérieur des alvéoles.

Un aéronef peut être muni d'une ou de plusieurs nacelles selon l'invention.

## Revendications

1. Nacelle (1) pour aéronef comprenant un capot (5), un moteur (6) logé dans un volume interne du capot, un canal (9) annulaire d'écoulement d'un flux de poussée secondaire ménagé entre le moteur et le capot, au moins un inverseur de poussée (2) pour la formation d'un flux inverse à partir du flux de poussée secondaire circulant dans le canal annulaire, comportant une pluralité de portes (10) ménagées dans une partie arrière (7) du capot, de manière à former un bord de fuite dudit capot, les portes sont montées en rotation sur des barres de liaison statique solidaires du capot, **caractérisée en ce qu'**en position fermée les portes sont accolées de proche et proche,
et **en ce que**,
l'inverseur de poussée comporte des moyens d'actionnement (18, 19, 20, 29) des portes, au moins un moyen d'actionnement actionnant deux portes adjacentes, au moins une porte étant actionnée par deux moyens d'actionnement et au moins un moyen d'actionnement étant monté sur une barre de liaison statique.

2. Nacelle selon la revendication 1, **caractérisée en ce que** lesdites barres de liaison statique sont recouvertes par les portes en position fermée.

3. Nacelle selon la revendication 2, **caractérisée en ce qu'**au moins une barre de liaison statique relie deux portes adjacentes.

4. Nacelle selon l'une des revendications 2 à 3, **caractérisée en ce qu'**au moins une barre de liaison statique s'étend entre une paroi interne et une paroi externe du capot.

5. Nacelle selon l'une des revendications 1 à 4, **caractérisée en ce qu'**au moins une porte comporte une partie avant (13) et une partie arrière (14) ménagées de manière à ce que la dimension de ladite partie avant s'étendant suivant la circonférence du capot et perpendiculairement à l'axe du moteur soit strictement supérieure à la dimension correspondante de ladite partie arrière.

6. Nacelle selon l'une des revendications 1 à 5, **caractérisée en ce qu'**au moins un moyen d'actionnement comporte un vérin (18) à deux tiges d'actionnement (19, 20), une extrémité de chaque tige étant solidaire d'une porte.

7. Nacelle selon l'une des revendications 1 à 6, **caractérisée en ce que** l'inverseur de poussée comporte des moyens rotatifs (22, 23) aptes à tourner autour de l'axe du moteur, des moyens d'actionnement (29) étant montés sur les moyens rotatifs de manière à entraîner l'actionnement des portes lors d'une rotation des moyens rotatifs.

8. Nacelle selon l'une des revendications 1 à 7, **caractérisée en ce que** les portes sont munies d'un revêtement acoustique.

9. Nacelle selon l'une des revendications 1 à 8, **caractérisée en ce que** l'inverseur de poussée comporte huit portes.

10. Nacelle selon l'une des revendications 1 à 8, **caractérisée en ce que** l'inverseur de poussée comporte seize portes.

11. Nacelle selon l'une des revendications 1 à 10, **caractérisée en ce que** les portes sont identiques entre elles, et interchangeables.

12. Aéronef comportant au moins une nacelle (1) selon l'une des revendications 1 à 11.

## Patentansprüche

1. Fluggerät-Pod (1), umfassend eine Haube (5), ein in einem inneren Volumen der Haube angeordnetes Triebwerk (6), einen zwischen dem Triebwerk und der Haube ausgeführten ringförmigen Kanal (9) für das Fließen einer sekundären Schubströmung, mindestens eine Schubumkehrvorrichtung (2) für die Bildung einer Umkehrströmung aus der sekundären Schubströmung, die im ringförmigen Kanal umläuft, mit einer Vielzahl von Klappen (10), die in einem hinteren Teil (7) der Haube ausgeführt sind, so dass eine Hinterkante der Haube gebildet wird, wobei die Klappen an Stangen zur statischen Verbindung, die fest mit der Haube verbunden sind, drehbar montiert sind, **dadurch gekennzeichnet, dass** die Klappen in der geschlossenen Position nahe aneinanderliegen
und dass
die Schubumkehrvorrichtung Mittel (18, 19, 20, 29) zur Betätigung der Klappen umfasst, wobei mindestens ein Betätigungsmittel zwei benachbarte Klappen betätigt, wobei mindestens eine Klappe durch zwei Betätigungsmittel betätigt wird und mindestens ein Betätigungsmittel an einer Stange zur statischen Verbindung montiert ist.

2. Pod nach Anspruch 1, **dadurch gekennzeichnet, dass** die Stangen zur statischen Verbindung durch die Klappen in der geschlossenen Position bedeckt sind.

3. Pod nach Anspruch 2, **dadurch gekennzeichnet, dass** mindestens eine Stange zur statischen Verbindung zwei benachbarte Klappen verbindet.

4. Pod nach einem der Ansprüche 2 bis 3, **dadurch gekennzeichnet, dass** sich mindestens eine Stange zur statischen Verbindung zwischen einer inneren Wand und einer äußeren Wand der Haube erstreckt.

5. Pod nach einem der Ansprüche 1 bis 4, **dadurch gekennzeichnet, dass** mindestens eine Klappe einen vorderen Teil (13) und einen hinteren Teil (14) umfasst, die so ausgeführt sind, dass die Abmessung des vorderen Teils, der sich gemäß dem Umfang der Haube und senkrecht zu der Achse des Triebwerks erstreckt, streng größer als die entsprechende Abmessung des hinteren Teils ist.

6. Pod nach einem der Ansprüche 1 bis 5, **dadurch gekennzeichnet, dass** mindestens ein Betätigungsmittel einen Zylinder (18) mit zwei Betätigungsstangen (19, 20) umfasst, wobei ein Ende jeder Stange fest mit einer Klappe verbunden ist.

7. Pod nach einem der Ansprüche 1 bis 6, **dadurch gekennzeichnet, dass** die Schubumkehrvorrichtung Drehmittel (22, 23) umfasst, die sich um die Achse des Triebwerks drehen können, wobei Betätigungsmittel (29) so an den Drehmitteln montiert sind, dass die Betätigung der Klappen bei einer Drehung der Drehmittel bewirkt wird.

8. Pod nach einem der Ansprüche 1 bis 7, **dadurch gekennzeichnet, dass** die Klappen mit einer Akustik-Beschichtung versehen sind.

9. Pod nach einem der Ansprüche 1 bis 8, **dadurch gekennzeichnet, dass** die Schubumkehrvorrichtung acht Klappen umfasst.

10. Pod nach einem der Ansprüche 1 bis 8, **dadurch gekennzeichnet, dass** die Schubumkehrvorrichtung sechzehn Klappen umfasst.

11. Pod nach einem der Ansprüche 1 bis 10, **dadurch gekennzeichnet, dass** die Klappen miteinander identisch und gegeneinander austauschbar sind.

12. Fluggerät, umfassend mindestens einen Pod (1) nach einem der Ansprüche 1 bis 11.

## Claims

1. Aircraft nacelle (1) comprising a cowling (5), an engine (6) housed in an internal volume of the cowling, an annular flow channel (9) for a secondary thrust flow, provided between the engine and the cowling, and at least one thrust reverser (2) for forming a reverse flow from the secondary thrust flow circulating in the annular channel, comprising a plurality of doors (10) provided in a rear part (7) of the cowling, so as to form a trailing edge of said cowling, the doors being mounted so as to rotate on static link rods fastened to the cowling, **characterized in that** the doors in the closed position are closely juxtaposed,
and **in that** the thrust reverser includes actuation means (18, 19, 20, 29) for actuating the doors, at least one actuation means actuating two adjacent doors, at least one door being actuated by two actuation means and at least one actuation means being mounted on a static link rod.

2. Nacelle according to Claim 1, **characterized in that** said static link rods are covered by the doors in the closed position.

3. Nacelle according to Claim 2, **characterized in that** at least one static link rod links two adjacent doors.

4. Nacelle according to either of Claims 2 and 3, **characterized in that** at least one static link rod extends between an internal wall and an external wall of the cowling.

5. Nacelle according to one of Claims 1 to 4, **characterized in that** at least one door has a front part (13) and a rear part (14) which are provided so that the dimension of said front part extending along the circumference of the cowling and perpendicular to the axis of the engine is strictly greater than the corresponding dimension of said rear part.

6. Nacelle according to one of Claims 1 to 5, **characterized in that** at least one actuation means comprises a double-acting cylinder (18) having two actuating rods (19, 20), one end of each rod being fastened to a door.

7. Nacelle according to one of Claims 1 to 6, **characterized in that** the thrust reverser includes rotary means (22, 23) capable of rotating about the axis of the engine, actuation means (29) being mounted on the rotary means so as to actuate the doors on rotation of the rotary means.

8. Nacelle according to one of Claims 1 to 7, **characterized in that** the doors are provided with an acoustic coating.

9. Nacelle according to one of Claims 1 to 8, **characterized in that** the thrust reverser comprises eight doors.

10. Nacelle according to one of Claims 1 to 8, **characterized in that** the thrust reverser comprises sixteen doors.

11. Nacelle according to one of Claims 1 to 10, **characterized in that** the doors are identical to one another and are interchangeable.

12. Aircraft comprising at least one nacelle (1) according to one of Claims 1 to 11.
